Europäisches Patentamt

European Patent Office

Office européen des brevets

(19)

(11) Publication number: **0 032 560**
**B1**

(12) EUROPEAN PATENT SPECIFICATION

(45) Date of publication of patent specification: **10.07.85**

(51) Int. Cl.⁴: **G 01 N 30/18, F 16 K 11/085**

(21) Application number: **80107899.9**

(22) Date of filing: **15.12.80**

(54) Direct on-column injector and injection method.

(30) Priority: **02.01.80 IT 1900580**

(43) Date of publication of application:
**29.07.81 Bulletin 81/30**

(45) Publication of the grant of the patent:
**10.07.85 Bulletin 85/28**

(84) Designated Contracting States:
**AT CH DE FR GB LI NL**

(56) References cited:
**DD-A- 135 419**
**DE-A-1 698 191**
**DE-A-2 211 744**
**DE-A-2 400 983**
**FR-A-1 388 466**
**FR-A-2 138 486**
**GB-A-1 427 821**
**US-A-3 220 246**
**US-A-3 458 699**
**US-A-4 128 008**

(73) Proprietor: **CARLO ERBA STRUMENTAZIONE S.p.A.**
**I-20090 Rodano Milano (IT)**

(72) Inventor: **Sisti, Giorgio**
**Viale Gavazzi 60**
**Melzo (Milan) (IT)**
Inventor: **Tosi, Bruno**
**Via Custoza 4**
**Carate Brianza (Milan) (IT)**
Inventor: **Trestianu, Sorin**
**7 Place Petite Suisse**
**Bruxelles (BE)**
Inventor: **Galli, Mario**
**Via Magenta 107**
**Legnano (Milan) (IT)**

(74) Representative: **Marietti, Giuseppe**
**CENTRO DI CONSULENZA IN PROPRIETA'**
**INDUSTRIALE Viale Caldara, 43**
**I-20122 Milano (IT)**

Courier Press, Leamington Spa, England.

**0 032 560**

(56) References cited:

**H.R.C. and C.C. Vol. 2 (6/1979) Dr. Alfred Hüthig
Verlag, Heidelberg, "Special cooling system for
the on-column injector in capillary Gas
Chromatography Eliminating Discrimination of
Sample Compounds" by M. Golli, S. Trestianu
and K. Grob, Jr., pages 366-370**

## Description

This invention relates to gas chromatography sample injection apparatus for mounting on the top of a chromatographic column and for intro-.duction of a liquid sample into said column by means of a piston-type syringe, of the type comprising:

— a block arrangement having a first passage referred to hereinafter as the injection passage therethrough, of a cross-sectional dimension just larger than that of the needle of said syringe, said injection passage connecting with and being in axial alignment with a second passage of somewhat larger cross-section than said first passage;

— said second passage being dimensioned to accommodate the top end of a chromatographic column capillary tube, and being provided with sealing means to seal the space between said second passage and said top end of said tube;

— a rotary valve member mounted in said block arrangement, and comprising a cylindrical plug-like body having a first bore passing diametrally therethrough, said body being rotatable about its cylindrical axis such that in an "open" position of said valve member, said first bore is in alignment with said injection passage and in a "closed" position of said valve member, said first bore is out of alignment with said injection passage;

— said block arrangement being provided with a third passage leading from said second passage to the exterior of said block arrangement and connectable to a source of carrier gas for urging the sample emerging from the syringe needle into the chromatographic column capillary tube; and to a method of using such apparatus.

Apparatus of the above-mentioned type is known in the art from H.R.C. and CC, Vol. 2 (6/1979), Dr. Alfred Hüthig, Verlag, Heidelberg, "Special cooling system for the on-column injector in Capillary Gas Chromatography Eliminating Discrimination of Sample Compounds" by M. Galli, S. Trestianu and K. Grob Jr., pages 366—370. In some cases, the use of direct injectors equipped with valves, which are open during injection and closed at the end thereof, leads to drawbacks, specially due to sample discrimination and loss of a sample portion.

In particular, when a so-called slow injection is carried-out, i.e. when the syringe piston is slowly lowered after the needle introduction into the injector, with the valve open, the formation of a sample liquid cap may occur at the free end of the injection needle, especially when the capillary column is at low temperature compared with the injection zone. This liquid cap formation depends on different factors, among which solvent nature, column diameter and surface treatment of the glass forming the column itself, temperature of the injection zone, pressure and flow rate of carrier gas and amount of sample injected, of course together with injection speed. The introduction of carrier gas, which is performed upstream the zone of cap formation, causes a breaking of same, but a portion of the sample still remains on the needle tip. This sample portion is then drawn with the syringe outside the column, or may possibly remain inside the injector body, but in any case said portion, which is usually richer in heavy compounds, causes a discrimination of the sample, as the volatile components thereof are vaporized more quickly than the heavy ones during the needle insertion.

To overcome this drawback, it is possible to perform a quick injection, during which the syringe piston is quickly lowered. In this case, especially if the upstream end section of the column is heated, a vaporization zone in expansion and at high pressure is immediately formed downstream the needle tip, said zone tending to push the injected sample back inside the needle and, moreover, into the passage between the needle and the column internal surface as well as into the injector passage. This involves, on one hand, a backward ejection of small drops and vapour and, on the other hand, a discrimination of heavy compounds inside the needle. Actually, vapours of volatile compounds and small drops of sample are produced, which are discharged into the atmosphere through the inlet passage for the syringe needle, as well as small drops which remain attached to the walls of the injector and of the initial section of the column together with condensed vapours, with loss of the sample portion entrapped inside the injector body.

Another problem arising in the case of a direct on column injection, especially when using certain solvents, is the problem of improving the work conditions at the injection end, by maintaining a certain exhaust to the atmosphere, in order to perform washing of the column and injector upper sections. This exhaust is useful in some cases and may be produced by keeping at least partially open the injection valve. However, this solution depends on the skill and sensitivity of the operator, who does not always prove to be up to the task.

Prior art which is of background interest in the context of the present invention is as follows:

British Patent No. GB—A—1,462,391 discloses fluid flow control valves used with pressure sensitive transducers in the measurement of a system under pressure. These valves permit selective pressure measurement of the fluid-pressure system, without over-pressurizing the transducer during the various operations. This result is obtained by means of a valve that includes venting means for venting into the atmosphere the pressure that takes place whenever a sampling or flushing operation is performed. This valve is not part of a chromatographic apparatus. U.S. Patent No. US—A—3,220,246 illustrates a two-way valve used to control the flow of eluent to a chromatography column and, in standardization position of operation, to prevent the flow of eluent to the chromatographic column. The valve is provided with an additional inlet passage which is connected to a conduit that supplies a standard liquid having a known constituent to the chromatographic apparatus.

French Patent, FR—A—1,388,466 relates to a vaporisation injector for a gas chromatographic column comprising a duct 19, a vaporisation chamber 16 and a tap 17 that allows isolation of the vaporisation chamber 16 from the atmosphere when the vaporisation step is not performed. The sample to be analyzed is introduced into the vaporisation chamber by means of a sample support fixed to one end of a rectilinear rod. The rod is inserted through the duct 19 until the sample support reaches the vaporisation chamber and, during the vaporisation step, the seal between the vaporisation chamber and the atmosphere is entrusted only to the contact between the rod and the inner circumference of the duct 19.

German Patent No. DE—A—2,211,744 shows an injector for gas chromatographic column in which the seal between the injection chamber and the atmosphere is ensured by a rubber septum to be perforated with the syringe needle containing the sample.

An object of this invention is an apparatus of the above-mentioned type to solve the problems referred to in particular to perform an injection without sample loss and without sample discrimination even in case of quick injection.

Another object of the present invention is to provide a new quick-type injection method which can be carried-out even with columns at high temperature and allows to perform said injection without the sample loss and discrimination, as noticed in injections under the same conditions with known injectors.

According to the invention an apparatus of the above mentioned type is characterized in that: said plug-like body has a second bore open at one end at an outside surface of said body and opening at its other end into said first bore; said block arrangement has a fourth passage one end of which opens onto the surface of said body such that it is aligned with said second bore at least when said valve member is in its "open" position, and the other end of which opens to the exterior of said block and is connectable to said source of carrier gas or to the atmosphere; the arrangement being such that: when a syringe is inserted such that its needle is accommodated in the injection passage and it projects into the capillary of the chromatographic column, carrier gas may be introduced, via the fourth passage of the block arrangement and the second bore of the plug-like body, into the area between the syringe needle and the walls of the injection passage so that the carrier gas will create a counterpressure in said injection passage to avoid sample return through said injection passage in the direction opposite to that of insertion of the syringe needle.

The invention also resides in a method of using said apparatus in accordance with claim 7 of the accompanying claims.

The apparatus according to the invention, may include means to permit the above-mentioned exhaust to the atmosphere when the valve is closed at the end of injection.

The introduction of additional carrier gas to provide a counter pressure in the injection passage during injection, allows, when the flow rate and pressure features of this introduction are suitably controlled, elimination of the above mentioned disadvantages in case of quick injections, in that the carrier gas flow gives rise to counterpressure which prevents sample loss and sample discrimination which usually occur with quick injection, as previously described. The means to permit exhaust to the atmosphere may comprise an additional bore in the valve member, which allows washing of the injector under the best possible conditions, since said exhaust means is positioned in the highest possible part of the apparatus.

Figure 1 is an axial cross-sectional view of a direct on column injector suitable for carrying out the invention, in the valve open position.

Figures 2, 2A, 3, 3A, 4, 4A, 5 and 5A illustrate, in a sectional view in a plane perpendicular to the rotation axis of valve body, different possible modifications of a valve used in the apparatus of the invention, in the open and closed position respectively, of the injection passage.

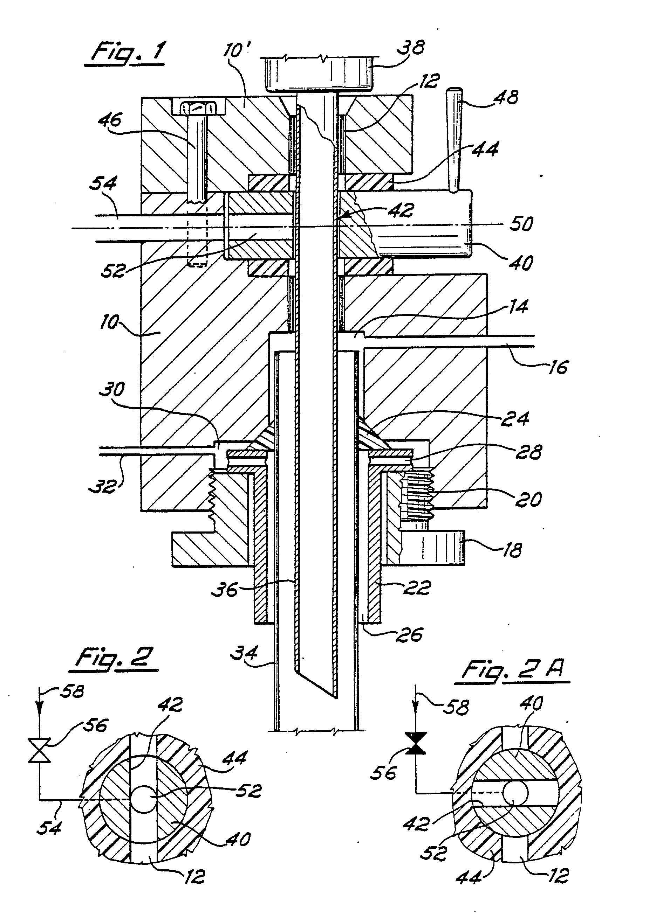

With reference to Figure 1, a direct on column injector comprises an injector body 10 made of suitable metal material, inside which an injection passage 12 is provided having a jacket formed by a stainless steel tube, for instance with inner diameter of 0.28 mm, said injection passage 12 leading to a wider passage 14 forming a chamber to receive a carrier gas which is introduced through a duct 16 provided for in the injector body.

A nut 18 threaded at 20 fits to the base section of the injector body 10 and keeps in position a cooling jacket 22 with a trapezoidal sealing gasket 24, said cooling jacket 22 showing a central passage 26 connected by means of fittings 28 to a chamber 30 formed in the lower section of the injector and connected, through a duct 32, to an inlet of cooling air. The gasket 24 pneumatically adheres to a glass capillary column 34, having for instance an inner diameter of 0.3 mm, which penetrates with its free end into the chamber 14.

The needle 36 of an injection syringe 38 is introduced through the injection passage 12 and the initial section of the gas chromatographic column 34, said needle having for instance an outer diameter of 0.23 mm.

Along the injection passage 12 a valve is positioned, said valve comprising a valve body 40 having a diametral through-channel 42, which is aligned with the injection passage in the valve open position. The valve body 40 is sealingly assembled, by means of gaskets 44, within the injector body 10, said gaskets, for instance made of polytetrafluoroethylene, being kept under pressure for instance by means of a series of bolts 46 acting on an upper section 10' of the injector body. The valve body 40 is controlled by means of a manual lever 48 which allows to perform a rotation of same around its own axis 50 until injection passage 12 is completely closed, in a substantially known way.

The valve body 40 has another channel, for instance an axial duct 52 which, in at least one of the valve positions, is connected, through a passage 54 provided in the injector body 10, to the outside of the injector itself, where it can be connected, according to different cases and choices, to a source for carrier gas introduction as well as directly to the atmosphere.

For the application of the method of quick injection said passage 54 is connected to the carrier gas source in the open position of valve 40 and the conditions for carrier gas introduction are such as to create a counterpressure sufficient to avoid sample loss and sample discrimination by return on the outside of the injection needle 36. Alternatively, the duct 54 may be connected to the atmosphere when the valve 40 is closed, in order to perform the exhaust operation.

Obviously, said injection conditions in the valve can be achieved by positioning the channel 52, in the valve body, in a different way from the one illustrated in Figure 1 or by providing for more than one channel, to be connected with the outside.

In Figure 2, the valve body 40 has, besides the injection channel 42, an axial duct 52 similar to the one illustrated in Figure 1, which is permanently in communication with a passage 54 connected by means of a valve 56 to a carrier gas source 58. In the condition of Figure 2, the valve 40 is open and the channel 42 allows the passage of the injection syringe needle, and the valve 56 is correspondingly open to perform a simultaneous introduction of carrier gas under suitable conditions of pressure and flow rate. In Figure 2A, the valve body 40 has been rotated by 90° to close the injection passage 12, while simultaneously the valve 56 is closed, and therefore the duct 52 is no longer connected with the outside. In this case no exhaust occurs at the end of injection.

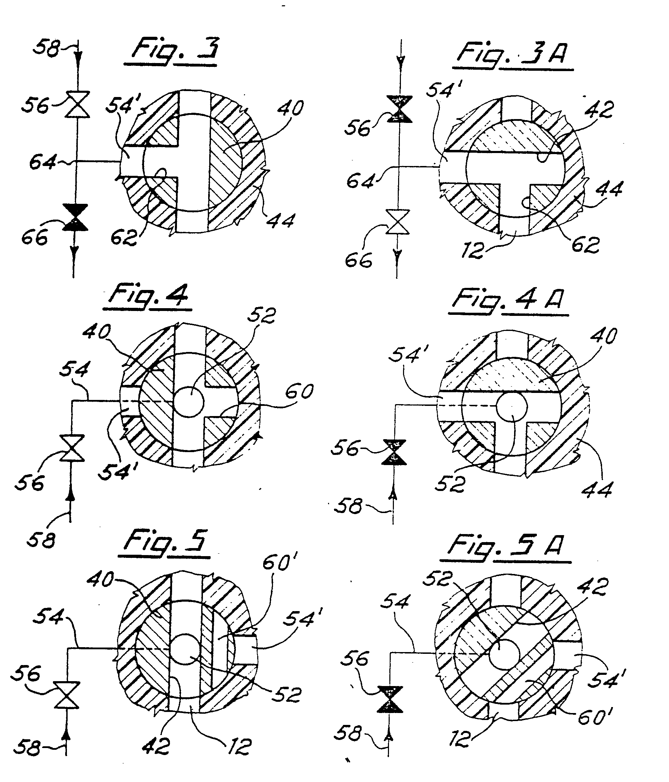

The embodiment of Figures 3 and 3A has one radial channel 62 in connection to the passage 54' when the valve is in its open position (Figure 3), while when the valve is in its closed position (Figure 3A), said radial channel 62 connects the downstream section of injection passage 12 to the passage 54' through the diametral channel 42. The passage 54' is connected, outside the injector, to a T-fitting 64, the two branches of which lead, on one hand, to a control valve 56 for introduction of carrier gas coming from a source 58, the valve 56 remaining open when the main valve 40 is open, as indicated in Figure 3, and, on the other hand, to a valve 66 which controls the connection to the atmosphere, said valve 66 being closed when the valve 40 is open. In the closed position of valve 40 (Figure 3A), valve 56 is closed and valve 66 is open. In this case, it is possible to obtain both an introduction of carrier gas in the open position of valve 40, and an exhaust towards atmosphere in the closed position of said valve 40.

This double possibility of carrier gas introduction and exhaust towards the atmosphere may be achieved by means of two channels provided in the valve body 40, a duct 52 operating as in the case of Figures 2 and 2A and a radial duct 60 operating to provide exhaust to atmosphere when the valve is closed, the configuration being then that shown in Figures 4 and 4A.

Finally, Figures 5 and 5A illustrate a further possible configuration, where the carrier gas introduction is performed by means of a channel 52 operating as in Figures 2, 2A and 4, 4A, while the exhaust is carried out through a duct 60', parallel to the passage 42 and connecting the injection passage 12 to the exhaust channel 54' when the valve is closed, said valve closure occurring by a rotation of less than 90°, for instance of 60° starting from the closure position.

## Claims

1. Gas chromatography sample injection apparatus for mounting on the top of a chromatographic column (34) and for introduction of a liquid sample into said column by means of a piston-type syringe, comprising:
— a block arrangement (10, 10') having a first passage (12) referred to hereinafter as the injection passage therethrough, of a cross-sectional dimension just larger than that of the needle of said syringe, said injection passage (12) connecting with and being in axial alignment with a second passage (14) of somewhat larger cross-section than said first passage (12);
— said second passage (14) being dimensioned to accommodate the top end of a chromatographic column capillary tube (34), and being provided with sealing means (24) to seal the space between said second passage and said top end of said tube (34);
— a rotary valve member mounted in said block arrangement (10, 10'), and comprising a cylindrical plug-like body (40) having a first bore (42) passing diametrally therethrough, said body being rotatable about its cylindrical axis such that in an "open" position of said valve member, said first bore (42) is in alignment with said injection passage (12) and in a "closed" position of said valve member, said first bore (42) is out of alignment with said injection passage (12);
— said block arrangement (10, 10') being provided with a third passage (16) leading from said second passage (14) to the exterior of said block arrangement and connectable to a source of carrier gas for urging the sample emerging from the syringe needle into the chromatographic column capillary tube (34); characterised in that:
said plug-like body (40) has a second bore (52, 62) open at one end at an outside surface of said body (40) and opening at its other end into said first bore (42); said block arrangement (10, 10') has a fourth passage (54, 54') one end of which opens onto the surface of said body (40) such that it is aligned with said second bore (52, 62) at least when said valve member is in its "open" position, and the other end of which opens to the exterior of said block and is connectable to said source of carrier gas or to the atmosphere;

— the arrangement being such that:

when a syringe is inserted such that its needle (36) is accommodated in the injection passage (12) and it projects into the capillary (34) of the chromatographic column, carrier gas may be introduced, via the fourth passage (54, 54') of the block arrangement (10, 10') and the second bore (52, 62) of the plug-like body (40), into the area between the syringe needle (36) and the walls of the injection passage (12) so that the carrier gas will create a counterpressure in said injection passage (12) to avoid sample return through said injection passage (12) in the direction opposite to that of insertion of the syringe needle.

2. Apparatus according to claim 1, wherein said fourth passage (54) is permanently aligned with said second bore (52) so as to provide a continuous connection with said injection passage (12), said fourth passage (54) being connected, outside the block arrangement (10, 10'), either via first valve means (56) to the carrier gas source (58) when the valve is in its open position, or, when the valve is in its closed position, to the atmosphere.

3. Apparatus according to claim 2 wherein said second bore (52) is substantially coaxial to the rotation axis of the plug like body (40) and perpendicular to said first bore (42).

4. Apparatus according to claim 1 wherein said second bore (62) in said plug like body (40) comprises a radial duct which leads radially from said first bore (42) and ends at the cylindrical surface of said plug-like body.

5. Apparatus according to claim 4 wherein said fourth passage (54') is formed in the seating for said valve member and is connected to the injection passage (12) via said radial duct (62) and said first bore (42) when the valve is in its open position, and via said first bore (42) and said radial duct (60) when the valve is in its closed position, said fourth passage being connectable via first valve means (56), to a carrier gas source (58) when the valve is in its open position or via second valve means (66) to the atmosphere when the valve is in its closed position.

6. Apparatus according to claim 1 wherein the valve member has a third bore (60') parallel to said first bore (42), which third bore connects the injection passage (12) to a fifth passage (54') in said block arrangement when the valve member is in its closed position, which is attained by rotating the valve member by an angle less than 90° from the open position, said fifth passage (54') being connected to the external atmosphere.

7. A method of rapid on-column injection of a sample into the capillary (34) of a gas chromatographic column using the apparatus according to claim 1 comprising the steps of inserting a syringe needle (36) into said injection and second passages (12, 14) with the valve in its open position so that said needle passes through said first bore (42) of said plug-like body of said valve member and into said column, and operating said syringe to inject a sample into said capillary, at the same time introducing carrier gas via said third passage (16) so as to urge the sample emerging from the syringe needle into the capillary, said method being characterised by introducing carrier gas via said fourth passage (54, 54') and said second bore (52, 62) into the area between the syringe needle (36) and the injection passage (12) whilst the valve is in its open position, so as to create a counterpressure sufficient to avoid sample return through said injection passage (12) in a direction opposite to that of insertion of the syringe needle.

**Patentansprüche**

1. Gaschromatographische Probeninjectionsvorrichtung, die zum Anbringen oberhalb einer chromatographischen Säule (34) und zur Eingabe einer flüssigen Probe darin mittels einer kolbenartige Spritze bestimmt ist, bestehend

— aus einem Gehäuse (10, 10'), das einen ersten im folgenden als Injektionsdurchgang bezeichneten Durchgang (12) mit einem Querschnitt grösser als dem der Spritzennadel aufweist, wobei dieser Injektionsdurchgang (12) an einen zweiten Durchgang (14) mit einem Querschnitt etwas grösser als dem des ersten Durchgang (12) angeschlossen und mit diesem axial ausgerichtet ist, und

— wobei der zweite Durchgang (14) so abgemessen ist, dass er das obere Ende eines Kapillarrohres (34) der chromatographischen Säule aufnimmt und mit einem den Raum zwischen dem zweiten Durchgang und dem oberen Ende des Kapillarrohres (34) abdichtenden Dichtungsmittel (24) versehen ist,

— aus einem hahnartigen, in dem Gehäuse (10, 10') untergebrachten und einen zylindrischen, drehbaren Ventilkörper (40) mit einer ersten diametral verlaufenden Bohrung (42) aufweisenden Ventil, wobei der zylindrische Ventilkörper um seine Achse gedreht werden kann, so dass, wenn das hahnartige Ventil in Offenstellung steht, die erste Bohrung (12) mit dem Injektionsdurchgang (12) fluchtend ist und, wenn das hahnartige Ventil in Schlussstellung ist, die erste Bohrung (42) mit dem Injektionsdurchgang (12) nicht fluchtend ist,

— wobei das Gehäuse (10, 10') mit einem dritten Durchgang (16) versehen ist, der sich vom zweiten Durchgang (14) bis die Aussenseite des Gehäuses erstreckt und mit einer Trägergasquelle verbunden werden kann, um die aus dem Spritzennadel austretende Probe in das Kapillarrohr (34) der chromatographischen Säule einzuführen, dadurch gekennzeichnet, dass

der drehbare, zylindrische Ventilkörper (40) eine zweite Bohrung (52, 62) aufweist, die an einem Ende auf eine äussere Fläche des Ventilkörpers (40) und am anderen Ende in die erste Bohrung (42) mündet, wobei das Gehäuse (10, 10') mit einem vierten Durchgang (54, 54') versehen ist, dessen eines Ende auf die Oberfläche des Ventilkörpers (40) mündet, so dass er mit der zweiten Bohrung (52, 62) verbunden wird mindestens wenn das hahnartige Ventil in Offenstellung ist und dessen anderes Ende in das Gehäuse mündet und mit der Trägergasquelle oder mit der Atmosphäre verbunden werden kann;

— wobei die Anordnung so getroffen ist, dass wenn eine Spritze in die Säule eingeführt wird, so dass ihre Nadel (36) in den Injektionsdurchgang (12) aufgenommen wird und in das Kapillarrohr (34) der chromatographischen Säule hineinragt, ein Trägergas durch den vierten Durchgang (54, 54') des Gehäuses (10, 10') und die zweite Bohrung (52, 62) des Ventilkörpers (40) in den Bereich zwischen der Spritzennadel (36) und der Injektionsdurchgangwandung eingegeben werden kann, so dass das Trägergas einen Gegendruck in den Injektionsdurchgang (12) bildet, um einen Rückfluss durch den Injektionsdurchgang (12) in Gegenrichtung auf die Einführrichtung der Spritzennadel vermieden wird.

2. Vorrichtung nach Anspruch 1, dadurch gekennzeichnet, dass der vierte Durchgang (54) mit der zweiten Bohrung (52) stets verbunden ist, so dass eine kontinuierliche Verbindung mit dem Injektionsdurchgang gebildet wird, wobei der vierte Durchgang (54) ausserhalb des Gehäuse (10, 10') entweder über ein Ventil (56) mit der Trägergasquelle (58) wenn das hahnartige Ventil in Offenstellung ist oder mi der Atmosphäre, wenn dieses Ventil in Schlussstellung ist, verbunden wird.

3. Vorrichtung nach Anspruch 2, dadurch gekennzeichnet, dass die zweite Bohrung (52) im wesentlichen koaxial mit der Drehachse des Ventilkörpers (40) und senkrecht zur ersten Bohrung (42) angeordnet ist.

4. Vorrichtung nach Anspruch 1, dadurch gekennzeichnet, dass die zweite Bohrung (62) des Ventilkörpers (40) einen radialen Kanal aufweist, der sich von der ersten Bohrung (42) bis die zylindrische Oberfläche des Ventilkörpers (40) erstreckt.

5. Vorrichtung nach Anspruch 4, dadurch gekennzeichnet, dass der vierte Durchgang (54') · in dem Gehäuse des hahnartigen Ventil ausgebildet ist und mit dem Injektionsdurchgang (12) durch den radialen Kanal (62) und die erste Bohrung (42) wenn das hahnartige Ventil in Offenstellung ist, und durch die erste Bohrung (42) und den radialen Kanal (60) wenn dieses Ventil in Schlussstellung ist, verbunden ist, wobei der vierte Durchgang über ein erstes Ventil (56) mit einer Trägergasquelle (58), wenn dieses Ventil in Offenstellung ist, und über ein zweites Ventil (66) mit der Atmosphäre, wenn dieses Ventil in seiner Schlussstellung ist, verbunden werden kann.

6. Vorrichtung nach Anspruch 1, dadurch gekennzeichnet, dass das hahnartige Ventil eine dritte, parallel zur ersten Bohrung (42) angeordnete Bohrung (60') aufweist, wobei die dritte Bohrung den Injektionsdurchgang (12) mit einem fünften Durchgang (54') des Gehäuse (10, 10'), wenn das hahnartige Ventil in Schlussstellung ist, verbindet, welche Stellung durch Drehung des gesagten Ventil um einen Winkel 90 von der Offenstellung erreicht wird, wobei der fünfte Durchgang (54') mit der Atmosphäre verbunden ist.

7. Verfahren zur schnellen on-column-Injektion einer Probe in das Kapillarrohr (34) einer chromatographischen Säule unter Verwendung der Vorrichtung nach Anspruch 1, bei dem eine Spritzennadel (36) in den Injektionsdurchgang (12, 14), wenn das hahnartige Ventil offen ist, eingeführt wird, so dass die Nadel durch die erste Bohrung (42) des Ventilkörpers und durch die Säule hindurchgeht, eine Probe in das Kapillarrohr injiziert wird und gleichzeitig ein Strom von Trägergas durch den dritten Durchgang (16) eingegeben wird, so dass die aus der Spritzennadel austretende Probe in das Kapillarrohr eingeführt wird, dadurch gekennzeichnet, dass der Trägergasstrom durch den vierten Durchgang (54, 54') und durch die zweite Bohrung (52, 62) in den Bereich zwischen der Spritzennadel (36) und dem Injektionsdurchgang (12) eingeführt wird, wenn das Ventil offen ist, so dass ein ausreichender Gegendruck gebildet wird, um einen Rückfluss der Probe durch den Injektionsdurchgang (12) in Gegenrichtung auf die Richtung der Spritzennadeleinführung zu vermeiden.

**Revendications**

1. Appareil pour l'injection d'échantillons en chromatographie en phase gazeuse, apte à être monté au sommet d'une colonne de chromatographie (34) et assurant l'introduction d'un échantillon liquide dans ladite colonne au moyen d'une seringue à piston, comprenant:

— un bloc (10, 10') ayant un premier passage (12), par la suite nommé le passage d'injection, d'une dimension, en coupe transversal, un peu plus large que celle de l'aiguille de ladite seringue, ledit passage d'injection (12) étant relié et en alignement axial avec un deuxième passage (14) un peu plus large, en coupe transversale, que ledit premier passage (12);

— ledit deuxième passage (14) étant dimensionné de sorte à loger l'extrémité supérieure d'un tube capillare de colonne de chromatographie et étant muni de moyens d'étanchéité (24) pour fermer l'espace entre ledit deuxième passage et ladite extrémité supérieure dudit tube (34);

— une vanne tournante montée dans ledit bloc (10, 10') et comprenant un corps cylindrique en forme de cheville (40) ayant un premier trou (42) qui le traverse diamétralement, ledit corps étant tournant autour de son propre axe cylindrique de sorte que, dans la position "ouverte" de ladite vanne, ledit premier trou (42) est aligné avec ledit passage d'injection (12) et dans la position "fermée" de ladite vanne, ledit premier trou (42) est hors d'alignement par rapport audit passage d'injection (12);

— ledit bloc (10, 10') étant pourvu d'un troisième passage (16) conduisant dudit deuxième passage (14) à l'extérieur dudit bloc et reliable à un source de gaz vecteur pour pousser l'échantillon en sortie de l'aiguille de la seringue dans le tube capillare (34) de la colonne de chromatographie; caractérisé en ce que:

ledit corps en cheville (40) a un deuxième trou (52, 62) ouvert d'un côté sur une surface extérieure dudit corps (40) et s'ouvrant de l'autre côté dans ledit premier trou (42); ledit bloc (10, 10') présente un quatrième passage (54, 54'), une extrémité duquel débouche sur la surface dudit corps (40) de sorte à être aligné avec ledit deuxième trou (52, 62) au moins lorsque ladite vanne est dans sa position "ouverte", et l'autre extrémité duquel débouche à l'extérieur dudit bloc et est reliable à ladite source de gaz vecteur ou à l'atmosphère;

la configuration étant telle que:

lorsque une seringue est introduite de sorte que son aiguille (36) est logée dans le passage d'injection (12) et pénètre dans le capillaire (34) de la colonne de chromatographie, le gaz vecteur peut être alimenté, par le quatrième passage (54, 54') du bloc (10, 10') et le deuxième trou (52, 62) du corps en cheville (40), à la zone entre l'aiguille (36) de la seringue et les parois du passage d'injection (12) de façon que le gaz vecteur crée une contre-pression dans ledit passage d'injection (12) pour empêcher le retour de l'échantillon à travers ledit passage d'injection (12) dans la direction opposée à celle d'introduction de l'aiguille de la seringue.

2. Appareil selon la revendication 1, caractérisé en ce que ledit quatrième passage (54) est aligné en permanence avec ledit deuxième trou (52) de sorte à assurer le reliage constant avec ledit passage d'injection (12), ledit quatrième passage (54) étant relié, à l'extérieur du bloc (10, 10'), ou à travers la première vanne (56), à la source (58) de gaz vecteur, lorsque la vanne est dans sa position ouverte, ou bien, lorsque la vanne est fermée, à l'atmosphère.

3. Appareil selon la revendication 2, caractérisé en ce que ledit deuxième trou (52) est essentiellement coaxial à l'axe de rotation du corps (40) et perpendiculaire audit premier trou (42).

4. Appareil selon la revendication 1, caractérisé en ce que ledit deuxième trou (62) dans ledit corps en cheville (40) comprend un conduit radial qui s'étend radialement dudit premier trou (42) et débouche sur la surface cylindrique dudit corps en cheville.

5. Appareil selon la revendication 4, caractérisé en ce que ledit quatrième passage (54') est formé dans le siège pour ladite vanne et est relié au passage d'injection (12) par ledit conduit radial (62) et ledit premier trou (42) lorsque la vanne est ouverte, et par ledit premier trou (42) et ledit conduit radial (60) lorsque la vanne est dans sa position fermée, ledit quatrième passage étant reliable, par la première vanne (56), à une source de gaz vecteur (58) lorsque la vanne est dans sa position ouverte, ou par la deuxième vanne (66) à l'atmosphère lorsque la vanne est dans sa position fermée.

6. Appareil selon la revendication 1, caractérisé en ce que la vanne a un troisième trou (60') parallèle audit premier trou (42), ledit troisième trou reliant le passage d'injection (12) à un cinquième passage (54') dans ledit bloc lorsque la vanne est dans sa position fermée, laquelle est obtenue en tournant la vanne d'un angle inférieur à 90° à partir de la position ouverte, ledit cinquième passage (54') étant relié à l'atmosphère.

7. Procédé pour l'injection rapide en colonne d'un échantillon dans le capillaire (34) d'une colonne de chromatographie en phase gazeuse, employant l'appareil selon la revendication 1, comprenant les phases d'introduire une aiguille (36) d'une seringue dans lesdits passage d'injection (12) et deuxième passage (14) avec la vanne dans sa position ouverte, de sorte que ladite aiguille passe à travers ledit premier trou (42) dudit corps en cheville de ladite vanne et dans la dite colonne, et d'actionner ladite seringue pour injecter un échantillon dans ledit capillaire, alimentant au même temps du gaz vecteur à travers ledit troisième passage (16) pour pousser l'échantillon sortant de l'aiguille de la seringue dans le capillaire, ledit procédé étant caractérisé par le fait d'introduire du gaz vecteur à travers ledit quatrième passage (54, 54') et ledit deuxième trou (52, 62) dans la zone entre l'aiguille (36) de la seringue et le passage d'injection (12), tandis que la vanne est dans sa position ouverte, de sorte à créer une contre-pression suffisante à empêcher que l'échantillon revienne à travers ledit passage d'injection (12) dans une direction opposée à celle d'insertion de l'aiguille de la seringue.

*Fig. 1*

*Fig. 2*

*Fig. 2 A*

*Fig. 3*

*Fig. 3 A*

*Fig. 4*

*Fig. 4 A*

*Fig. 5*

*Fig. 5 A*